# FASCICULE DE BREVET EUROPEEN

(11) **EP 1 152 260 B1**
(45) Date de publication et mention de la délivrance du brevet: **21.12.2005**
(21) Numéro de dépôt: 01401123.3
(22) Date de dépôt: 30.04.2001
(51) Int. Cl.: G01S 17/58, G01S 17/95, G01S 7/481, G01S 7/486, G01S 7/487

(54) **Récepteur à filtres spectraux et lidar Doppler à détection directe en faisant application**
Empfänger mit spektralen Filtern und diesen verwendende Doppler lidar mit Direktdetektion
Receiver with spectral filters and direct detection Doppler lidar using same

(30) Priorité: 02.05.2000 FR 0005578
(43) Date de publication de la demande: 07.11.2001
(73) Titulaire: EADS ASTRIUM SAS, 31402 Toulouse Cedex 4 (FR)
(72) Inventeur: Morancais, Didier, 31850 Beaupuy (FR); Fabre Frédéric, 31000 Toulouse (FR); Visser, Huibert, 2628 CK Delft (NL)
(74) Mandataire: Loisel, Bertrand

(56) Documents cités:
- US-A- 5 216 477
- ELORANTA E W ET AL: "Modification of the High Spectral Resolution Lidar for the measurement of multiply scattered lidar returns" CONFERENCE PROCEEDINGS. SECOND TOPICAL SYMPOSIUM ON COMBINED OPTICAL-MICROWAVE EARTH AND ATMOSPHERE SENSING (CAT. NO.95TH8015), CONFERENCE PROCEEDINGS SECOND TOPICAL SYMPOSIUM ON COMBINED OPTICAL-MICROWAVE EARTH AND ATMOSPHERE SENSING, ATLANTA, GA, U, page 204 XP002157459 1995, New York, NY, USA, IEEE, USA ISBN: 0-7803-2402-1
- GRUND C J ET AL: "UNIVERSITY OF WISCONSIN HIGH SPECTRAL RESOLUTION LIDAR" OPTICAL ENGINEERING,US,SOC. OF PHOTO-OPTICAL INSTRUMENTATION ENGINEERS. BELLINGHAM, vol. 30, no. 1, 1991, pages 6-12, XP000173780 ISSN: 0091-3286

## Description

La présente invention a pour objet un récepteur spectral permettant d'extraire une bande passante étroite d'un flux lumineux. Elle est utilisable dans tout instrument optique dans lequel on souhaite extraire, d'un faisceau lumineux d'entrée, au moins deux raies spectrales fines, et si nécessaire disposer également d'un faisceau de sortie contenant la bande résiduelle. Elle trouve une application particulièrement importante, bien que non exclusive, dans les dispositifs de mesure de distance par réflexion d'impulsions lumineuses brèves, dits "lidars", et notamment dans les lidars Doppler - effectuant également une mesure de vitesse - dits incohérents ou à détection directe.

On connaît déjà des séparateurs spectraux capables d' extraire, d'un faisceau incident, deux faisceaux de sortie, correspondant à deux bandes étroites. Le séparateur de l'instrument de mesure de décalage Doppler décrit dans le brevet FR-A-2 648 915 utilise deux filtres étalons Fabry - Pérot entre lesquels est réparti le flux lumineux fourni par un appareil optique d'observation. Cette disposition fait que chaque filtre ne reçoit que la moitié du flux d'entrée ce qui constitue un inconvénient particulièrement grave lorsque l'appareil optique (généralement un télescope) fournit un flux limité qui doit être utilisé au mieux. En effet la précision obtenue est sensiblement proportionnelle à la racine carrée du flux.

On connaît l'application d'un filtre étalon pour livrer passage à une bande étroite d'une part, et de réfléchir la fraction du spectre hors de cette bande par le même filtre, comme décrit dans l'article de C. Grund et E. Eloranta: "University of Wisconsin High Spectral Resolution Lidar", Optical Engineering, Vol. 30, No. 1, Janvier 1991.

La présente invention vise notamment à fournir un récepteur permettant simultanément et à la fois une séparation spectrale d'extraction d'au moins deux bandes passantes très étroites et une utilisation optimale du flux lumineux d'entrée disponible.

Dans ce but elle propose notamment un récepteur
- ayant successivement, dans la direction de propagation d'un faisceau de lumière d'entrée, un polariseur incliné sur la dite direction, une lame quart d'onde, et un premier filtre étalon à cavité accordée livrant passage à une bande spatiale étroite et réfléchissant la fraction du spectre du faisceau située hors de la bande passante vers la lame quart d'onde et le polariseur et
- ayant, sur le trajet de la dite fraction du spectre, après réflexion sur le polariseur, un second filtre étalon à cavité accordée livrant passage à une autre bande spectrale étroite.

Souvent un réflecteur tel qu'un miroir sera placé sur le trajet de la dite fraction en amont du second filtre étalon pour que les deux filtres puissent être placés parallèlement l'un à l'autre.

Chaque filtre étalon sera généralement un filtre Fabry-Pérot à réflexions multiples, en un matériau choisi de façon à être transparent pour la lumière du faisceau d'entrée à analyser. Une sélectivité élevée sera obtenue en prévoyant des réflexions suffisamment nombreuses, généralement plusieurs dizaines. Le polariseur sera avantageusement remplacé par une lame utilisée sous une incidence de Brewster, qui transmet la polarisation parallèle au plan d'incidence et réfléchit la polarisation orthogonale. Toutefois on peut également utiliser d'autres polariseurs, tels qu'un cube séparateur.

Un tel récepteur a des caractéristiques très favorables. La résolution spectrale et le rendement optique d'un tel récepteur sont très élevés. Les bandes passantes extraites peuvent être aussi fines que nécessaire, jusqu'à quelques dizaines de MHz ou même davantage. Chaque étalon est généralement utilisé en incidence normale. La tolérance aux erreurs d'alignement est alors élevée (typiquement de plusieurs dizaines de µrad), même à haute résolution. Le champ de vue est lui aussi important lorsque l'étalon est utilisé en incidence normale. Il y a accès temporel simultané aux deux voies, ce qui permet un accès temporel quasi simultané sur les deux voies si on le souhaite.

Le récepteur peut être notamment incorporé à un lidar Doppler qui comporte, de plus, des moyens de détermination du décalage Doppler provenant de la réflexion d'une impulsion lumineuse monochromatique brève sur une cible mobile. Parmi ces lidars, l'invention trouve un intérêt tout particulier dans les lidars utilisés pour mesurer avec une résolution élevée le décalage spectral d'impulsions lumineuses réfléchies ou diffusées par l'atmosphère, les nuages ou la surface du sol et provenant d'un laser à terre ou monté sur un aéronef ou un satellite.

L'invention vise donc également à fournir un lidar atmosphérique qui permet de déterminer l'altitude de la couche atmosphérique, des nuages ou du sol à partir de mesures de temps de vol des impulsions réfléchies sur des particules atmosphériques et leur vitesse, et cela en déterminant la fréquence centrale du signal rétrodiffusé - et donc son décalage par rapport à la fréquence d'émission. Dans un mode particulier de réalisation elle vise à tenir compte de la présence simultané de deux composantes, d'origines différentes, du spectre rétrodiffusé par l'atmosphère.

Il peut être utile de rappeler deux éléments.

L'un est que la mesure locale de vent exige de résoudre, pour chaque altitude, le spectre de longueur d'onde du signal rétroréfléchi ou rétrodiffusé. Le document FR-A-2 735 935 décrit un lidar à interféromètre de Fizeau qui permet d'obtenir un rapport signal sur bruit élevé en accumulant les résultats obtenus au cours de nombreux tirs laser successifs, pour une bande spectrale étroite. L'accumulation permet de mesurer des décalages Doppler très faibles (par exemple 5 MHz pour une vitesse de 1 m/s et une longueur d'onde de 0,35 µm) dus au mouvement des particules.

L'autre est que, pour les lidars à courte longueur d'onde (inférieure à environ 0,5 µm), le spectre rétrodiffusé par l'atmosphère comporte deux composantes spectrales.

La première composante, dite de Mie, est de largeur spectrale égale ou similaire à celle du laser (environ 25 à 50 MHz) et provient de la diffusion sur des particules de type aérosol.

La seconde, dite de Rayleigh, est de largeur spectrale beaucoup plus importante (environ 3.5 GHz à mi-ha uteur à la longueur d'onde de 0.35 µm) et provient de la diffusion sur les molécules de l'air. Cette deuxième composante est d'autant plus intense que la longueur d'onde est courte. Ces deux composantes sont complémentaires pour la mesure des vents et il est utile d' en tenir compte simultanément.

Un lidar Doppler à détection directe permettant de mesurer la fréquence centrale du signal rétrodiffusé et éventuellement de tenir compte des deux composantes d'origines différentes du spectre rétrodiffusé par l'atmosphère, peut comporter une source lumineuse impulsionnelle de lumière polarisée telle qu'un laser, un récepteur du genre ci-dessus, disposé pour recevoir des échos d'impulsions lumineuses émises par la source et, sur chaque trajet de sortie du récepteur, un détecteur permettant d'analyser spectralement le faisceau correspondant. Chaque détecteur peut être un dispositif matriciel à couplage de charges ou CCD recevant ainsi des composantes spectrales sélectionnées par les filtres et dont l'intensité respective fournit une indication sur le décalage fréquentiel par rapport à la fréquence médiane entre les centres des bandes passantes des filtres étalons.

La recherche du centre de la raie et de l'écart spectral dû à l'effet Doppler est facilitée dans le cas d'un récepteur à deux filtres étalons en accordant les deux filtres de façon que leurs bandes passantes se placent symétriquement sur les ailes de la raie rétrodiffusée en l'absence de décalage Doppler, en détectant les deux flux de sortie des filtres et en calculant le rapport entre la différence des flux et leur somme. Les filtres étalons sont avantageusement accordés de façon que le rapport entre la différence des flux et leur somme soit le même pour le spectre de Mie et de Rayleigh.

L'invention profite ainsi de ce que le récepteur ne présente que des pertes très faibles. En d'autres termes elle propose un lidar vent comportant un récepteur du type ci-dessus et des moyens de détermination du décalage Doppler par calcul du rapport entre la différence et la somme des flux.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :
- la figure 1 est un schéma synoptique d'un lidar incorporant un mode particulier de mise en oeuvre de l'invention ;
- la figure 2 est un schéma montrant la disposition relative du spectre Mie et du spectre Rayleigh pour une raie dans l'ultra violet ;
- la figure 3 montre une disposition possible les courbes de transmission des filtres d'un séparateur conforme à un mode de mise en oeuvre de l'invention, par rapport à un spectre de diffusion Rayleigh ;
- la figure 4 montre un montage possible des étalons, intégrés dans un seul composant.

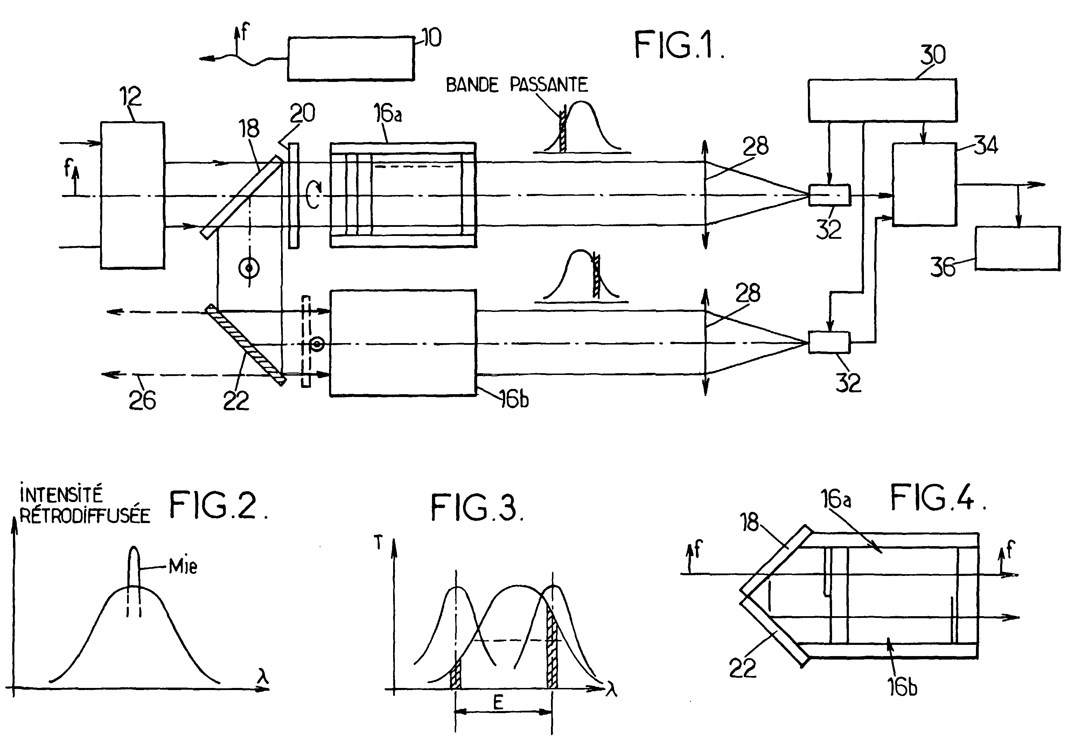

Le lidar représenté sur la figure 1 comprend une source 10 d'impulsions lumineuses brèves de lumière polarisée linéairement dans la direction indiquée par une flèche f et, sur un trajet de retour du flux lumineux rétrodiffusé, une optique afocale telle qu'un télescope suivie d'un récepteur spectral 14 à deux filtres étalons 16a et 16b de même constitution. Seule celle de l'analyseur 6a est montrée.

La source 10 est généralement constituée par un laser émettant des impulsions monochromatiques très brèves (20 à 30 ns en général) dans le visible ou dans l'ultraviolet. On peut notamment utiliser un laser Nd-YAG à une longueur d'onde de 355 nm.

Le faisceau réfléchi rétrodiffusé est reçu sur un polariseur 18, représenté sous forme d'une lame de Brewster orientée pour livrer passage au faisceau d'entrée. Le faisceau de sortie traverse une lame quart-d'onde 20, qui peut être une lame mince en matériau biréfringent comme le quartz. La lame quart-d'onde est suivie du premier filtre étalon 16a. ce filtre sera généralement un filtre interférentiel de type Fabry-Pérot. Une trentaine de réflexions permettent d'obtenir la transmission spectrale nécessaire à des mesures satisfaisantes. Dans la pratique, on utilisera généralement un filtre étalon ayant des plaques en silice et des cales en matériau à faible coefficient de dilatation. Les plaques et les cales sont avantageusement assemblées par adhésion moléculaires, pour d'obtenir la stabilité mécanique, d'environ 2 nm, requise en ultraviolet. Les faces internes des plaques seront généralement recouvertes de couches minces diélectriques assurant une réflectivité importante. On a ainsi pu obtenir une réflectivité de 80 % avec une distance entre plaques de 3 mm et un intervalle spectral libre de 20 pm pour une longueur d'onde de 350 nm.

Le déphasage à chaque réflexion peut être rendu minime, puisque les couches minces sont utilisées habituellement en incidence normale. La perte due aux déphasages des réflexions multiples pourra généralement être réduite à environ 0,1 %. Les dioptres air-verre seront généralement recouverts de couches diélectriques antireflet pour améliorer l'efficacité optique du séparateur spectral. Dans le cas d'une source 10 ayant une longueur d'onde de 0,35 µm, le filtre 16a aura généralement une transmission maximale T de 70 % environ, une largeur spectrale à mi-hauteur d'environ 1 pm et une perte de flux due au déphasage de quelques pour cent, y compris dans le polariseur 18. Toujours pour la même longueur d'onde de 0,35 µm, les tolérances d'alignement et le champ de vue peuvent être respectivement de 50 µrad et de quelques mrad, en incidence normale.

Le récepteur ainsi constitué fonctionne de la façon suivante : le faisceau incident est polarisé linéairement par le polariseur 18. La lame quart-d'onde 20 donne au faisceau une polarisation circulaire. Le faisceau réfléchi par le filtre étalon 16a retraverse la lame 20 et redevient polarisé linéairement, avec une polarisation orthogonale à la polarisation initiale. Il est alors réfléchi par le polariseur 18. Ce faisceau réfléchi n'est atténué, par rapport au faisceau d'entrée, que des pertes, qui sont minimes , et de la bande étroite transmise par le filtre 16a. Il est reçu par un miroir 22 qui l'oriente vers le filtre étalon 6b placé parallèlement au filtre 16a et fonctionnant comme le filtre 16a, mais pour extraire une bande différente.

Dans une variante de réalisation, une lame quart d'onde 24 est interposée entre le miroir 22 formé par un polariseur et le filtre 16b. Il est alors possible de recueillir un flux de sortie 26 correspondant au flux d'entrée moins les brèches étroites créées par les filtres, soit pour une autre utilisation, soit pour traiter la composante obtenue par la diffusion Rayleigh, dans une bande beaucoup plus large que la composante due à la diffusion Mie (comme indiqué dans la demande FR 99 00566 à laquelle on pourra se reporter) si les bandes passantes des filtres étalons sont optimisées pour utiliser la diffusion Mie.

Le récepteur 6a est suivi d'une optique relais 18 qui focalise le faisceau reçu sur un détecteur. Dans le cas illustré sur la figure 1, chaque faisceau de sortie est focalisé par un objectif 28 sur la zone image d'un capteur matriciel à couplage de charges ou CCD 32. Cette zone image comporte P lignes et N colonnes de sites photosensibles. Un séquenceur 30 définit, à chaque émission d'une impulsion par la source 10, une période d'observation au cours de laquelle le CCD 32 mesure et stocke le signal optique reçu et une période de lecture. Les signaux lus par un circuit 34 sont traités par un circuit de traitement 36 qui calcule I a différence des flux et leur somme et détermine le rapport. On pourra se reporter à la demande de brevet FR 99 16482 ou 0004123 pour ce qui est d'une constitution possible des capteurs.

Dans une variante, un seul capteur CCD est utilisé, soit en alternance, soit avec affectation de certaines colonnes à une voie et des autres colonnes à I autre voie. Dans une autre variante encore un filtre interférentiel 16 distribue spectralement la lumière reçue vers différentes colonnes de la zone image.

Comme on l'a indiqué plus haut, la lumière rétrodiffusée a deux origines différentes aux longueurs d'onde courtes. La figure 2 montre que les composantes ont des largeurs à mi-hauteur très différentes, de 3,5 GHz environ pour le spectre Rayleigh et de 25 à 50 MHz environ pour le spectre de Mie, à 350 nm.

Pour minimiser les dérives spectrales entre les filtres 16a et 16b, il peut aussi être envisagé de les intégrer dans un seul composant. Cette approche minimise les variations différentielles, dues par exemple à des écarts de températures.

La constitution matérielle du récepteur peut être celle schématisée sur la figure 5, qui garantit une stabilité spectrale élevée des deux filtres et évite les biais de mesure. Le récepteur est intégré dans un seul composant optique. Le polariseur 18 et la lame quart d'onde 20 sont fixées sur un double étalon de grande largeur partageant les mêmes couches et les mêmes intercalaires dont une fraction constitue le premier filtre et une autre fraction constitue le second filtre. Une couche mince 40 équilibre les filtres. Le miroir 22 est fixé symétriquement au polariseur.

Pour tenir compte de façon prépondérante d'un des spectres, l'écartement E des pics de transmission T des filtres étalons est sensiblement égal à la largeur à mi-hauteur de ce spectre, comme indiqué sur la figure 3 où est indiqué l'effet du décalage sur les intensités transmises. Un compromis pour tenir compte des deux spectres conduira à resserrer les pics de transmission par rapport au spectre de Rayleigh pour analyser les ailes du spectre Rayleigh et la variation de transmission du spectre Mie, comme indiqué sur la figure 4.

## Revendications

1. Récepteur à filtres étalons ayant successivement, dans la direction de propagation d'un faisceau de lumière d'entrée, un polariseur (18) incliné sur la dite direction, une lame quart d'onde (12), et un premier filtre étalon (16a) à cavité accordée livrant passage à une bande spatiale étroite et réfléchissant la fraction du spectre du faisceau hors de la bande vers la lame quart d'onde et le polariseur et ayant, sur le trajet de la dite fraction du spectre, qui est réfléchie par le polariseur (18), un second filtre étalon (16b) à cavité accordée livrant passage à une autre bande spectrale étroite.

2. Récepteur selon la revendication 1, **caractérisé en ce que** chaque filtre étalon est un filtre Fabry-Pérot à réflexions multiples, placé sous incidence normale.

3. Récepteur selon la revendication 1 ou 2, **caractérisé en ce que** le polariseur (18) est une lame de Brewster.

4. Récepteur selon la revendication 1, 2 ou 3, **caractérisé en ce qu'**il est intégré dans un seul composant optique, le polariseur (18) et la lame quart d'onde (20) étant fixées sur un double étalon de grande largeur partageant les mêmes couches et les mêmes intercalaires, dont une fraction constitue le premier filtre et une autre fraction constitue le second filtre.

5. Récepteur selon l'une quelconque des revendications précédentes, **caractérisé par** un miroir (22) placé en amont du second filtre étalon (6b) placé parallèlement au premier filtre (16a).

6. Récepteur selon la revendication 5, **caractérisé en ce qu'** une lame quart d'onde (24) est interposée entre le miroir (22) formé par un polariseur et le second filtre.

7. Lidar Doppler comprenant un récepteur suivant l'une quelconque des revendications précédentes d'extraction de deux bandes passantes étroites d'un faisceau de lumière polarisé, décalées l'une par rapport à l'autre, et comprenant des moyens de détermination du décalage Doppler du faisceau à partir de la mesure de l'intensité des bandes spectrales à la sortie des deux filtres.

8. Lidar Doppler à détection directe suivant la revendication 7, pour mesurer simultanément deux composantes d'origines différentes du spectre rétrodiffusé par l'atmosphère, comme le spectre de Mie et le spectre de Rayleigh, comportant de plus une source lumineuse impulsionnelle (10), dont les deux filtres étalons sont accordés de façon que leurs bandes passantes se placent symétriquement sur les ailes de la raie rétrodiffusée en l'absence de décalage Doppler.

9. Lidar Doppler selon la revendication 8, **caractérisé par** des moyens prévus pour mesurer les flux de sortie des deux filtres et calculer le rapport entre la différence des flux et leur somme.

10. Lidar Doppler selon la revendication 7 ou 8, **caractérisé en ce que** les deux filtres étalons sont accordés de façon que le rapport entre la différence des flux et leur somme soit le même pour le spectre de Mie et de Rayleigh.

## Patentansprüche

1. Empfänger mit Etalonfiltern, der in der Richtung der Ausbreitung eines eingehenden Lichtstrahls nacheinander einen Polarisator (18), der in dieser Richtung geneigt ist, ein Viertelwellenlängenplättchen (12) und einen ersten, einen passenden Hohlraum aufweisenden Etalonfilter (16a) aufweist, der einen Durchgang für ein begrenztes räumliches Band liefert und den Bruchteil des Spektrums des Strahls ausserhalb des Bandes zum Viertelwellenlängenplättchen reflektiert, und wobei der Empfänger auf dem Weg des durch den Polarisator (18) reflektierten Bruchteils des Spektrums einen zweiten, einen passenden Hohlraum aufweisenden Etalonfilter (16b) aufweist, der einen Durchgang für ein anderes begrenztes Spektralband liefert.

2. Empfänger nach Anspruch 1, **dadurch gekennzeichnet, dass** jeder Etalonfilter ein Fabry-Pérot-Filter mit Mehrfachreflektion ist, der unter normalem Einfall angeordnet ist.

3. Empfänger nach Anspruch 1 oder 2, **dadurch gekennzeichent, dass** der Polarisator (18) ein Brewster-Plättchen ist.

4. Empfänger nach Anspruch 1, 2 oder 3, **dadurch gekennzeichent, dass** er in einer einzelnen optischen Komponente integriert ist, wobei der Polarisator (18) und das Viertelwellenlängenplättchen (20) auf einem doppelten Etalon großer Breite befestigt sind, wobei sie die gleichen Schichten und die gleichen Einlagen teilen, wobei ein Teil des Etalons den ersten Filter und ein anderer Teil den zweiten Filter bildet.

5. Empfänger nach einem der vorhergehenden Ansprüche, **gekennzeichnet durch** einen Spiegel (22), der dem parallel zum ersten Filter (16a) angeordneten zweiten Filter (16b) vorgelagert ist.

6. Empfänger nach Anspruch 5, **dadurch** gekennzeichent, dass ein Viertelwellenlängenplättchen (24) zwischen dem durch einen Polarisator gebildeten Spiegel (22) und dem zweiten Filter angeordnet ist.

7. Doppler-Lidar, der einen Empfänger nach einem der vorhergehenden Ansprüche umfasst zum Extrahieren von zwei beschränkten, durchgehenden Bändern eines polarisierten Lichtstrahls, wobei der eine bezogen auf den anderen verschoben ist, und der Erfassungsmittel für die Dopplerverschiebung des Strahls ausgehend von der Messung der Intensität der Spektralbänder am Ausgang der beiden Filter umfasst.

8. Doppler-Lidar mit direkter Erfassung nach Anspruch 7, zum gleichzeitigen Messen von zwei Komponenten mit unterschiedlichen Ursprüngen des von der Atmosphäre zurückgesendeten Spektrums, wie das Mie-Spektrum und das Rayleigh-Spektrum, ferner umfassend eine leuchtende Impulsquelle (10), bei der die beiden Etalonfilter derart angepasst sind, dass sich ihre durchgehenden Bänder bei fehlender Dopplerverschiebung symmetrisch auf den Flügeln der zurückgesendeten Spektrallinien anordnen.

9. Doppler-Lidar nach Anspruch 8, **gekennzeichnet durch** Mittel, welche dafür vorgesehen sind, die Ausgangsflüsse der beiden Filter zu messen und das Verhältnis zwischen der Differenz der Flüsse und ihrer Summe zu berechnen

10. Doppler-Lidar nach Anspruch 7 oder 8, **dadurch gekennzeichnet, dass** die beiden Etalonfilter derart angepasst sind, dass das Verhältnis zwischen der Differenz der Flüsse und ihrer Summe für das Mie-Spektrum und das Rayleigh-Spektrum gleich ist.

## Claims

1. Etalon filter receiver having successively, in the propagation direction of an input light beam, a polariser (18) at an inclination to said direction, a quarter-wave plate (12), and a first etalon filter (16a) with a tuned cavity allowing the passage of a narrow spatial band and reflecting the beam spectrum fraction outside the band toward the quarter-wave plate and the polariser, and having, on the path of said spectrum fraction, which is reflected by the polariser (18), a second etalon filter (16b) with a tuned cavity allowing the passage of a further narrow spectral band.

2. Receiver according to claim 1, **characterised in that** each etalon filter is a Fabry-Pérot filter with multiple reflections under normal incidence.

3. Receiver according to either claim 1 or claim 2, **characterised in that** the polariser (18) is a Brewster plate.

4. Receiver according to any one of claims 1 to 3, **characterised in that** it is integrated into a single optical component, the polariser (18) and the quarter-wave plate (20) being fixed on a broad double etalon sharing the same layers and the same intermediate layers, of which a fraction constitutes the first filter and a further fraction constitutes the second filter.

5. Receiver according to any one of the preceding claims, **characterised by** a mirror (22) placed before the second etalon filter (6b) which is parallel to the first filter (16a) .

6. Receiver according to claim 5, **characterised in that** a quarter-wave plate (24) is interposed between the mirror (22) formed by a polariser and the second filter.

7. Doppler lidar comprising a receiver according to any one of the preceding claims, for extracting two narrow bandwidths, which are offset with respect to one another, of a polarised light beam, and comprising means for determining the Doppler shift of the beam on the basis of the intensity measurement of the spectral bands at the output of the two filters.

8. Direct detection Doppler lidar according to claim 7, for simultaneously measuring two components of different origins of the spectrum scattered back by the atmosphere, such as the Mie spectrum and the Rayleigh spectrum, additionally comprising a pulsed light source (10), of which the two etalon filters are tuned such that their bandwidths are symmetrically placed on the wings of the scattered back line in the absence of a Doppler shift.

9. Doppler lidar according to claim 8, **characterised by** means provided for measuring the output fluxes of the two filters and calculating the ratio between the difference of the fluxes and their sum.

10. Doppler lidar according to either claim 7 or claim 8, **characterised in that** the two etalon filters are tuned such that the ratio between the difference of the fluxes and their sum is the same for the Mie spectrum and the Rayleigh spectrum.
